# EUROPEAN PATENT APPLICATION

(11) **EP 0 956 891 A2**
(43) Date of publication of application: **17.11.1999**
(21) Application number: 99303747.2
(22) Date of filing: 13.05.1999
(51) Int. Cl.: B01D 29/01, B01D 29/64

(54) **Apparatus for screening of waste water**

(30) Priority: 13.05.1998 GB 9810094
(71) Applicant: Smyllie, Robin, Kilmalcom PA13 4PF (GB)
(72) Inventor: Smyllie, Robin, Kilmalcom PA13 4PF (GB)
(74) Representative: Murnane, Graham John

(57) **Abstract**

An apparatus (10) for the screening and removal of waste from waste water comprises a waste water channel (14) with a perforated screen (12) through which waste water flows. The screen (12) collects solid waste from the waste water which is then removed from the screen (12) using a mechanised (20). The head (20) is located at the end of a mechanical arm (18) which is pivotable and moved up and down a shaft (22) so that the arm (18) brings the head (20) into contact with the screen (12). The head (20) then moves up and down the screen (12) scraping away the collected waste and then the waste is removed by suction through an extraction tube (30) to a jet pump or suction pump and on to a compactor or treatment unit.

## Description

This invention relates to apparatus for screening of waste water. Particularly, but not exclusively, it relates to apparatus for fine screening of waste water in sewage plants and industrial processing plants.

Screening of waste water is conducted in treatment plants in order to separate and filter out solid particles from the waste water. Conventionally apparatus used for fine screening may consist of a flat or curved perforated plate through which water, but not sufficiently large solid particles, can pass. The problem associated with these perforated plates is that they easily become blocked and require to be removed and cleaned or replaced to allow continued screening.

Attempts have been made to overcome the problems associated with plate screens by incorporating mechanisms which rotate the screens in order to remove the collected solid particles. Conventional apparatus of this type include spiral sieve arrangements, for example the NOGGERATH (TM) Spiral Sieve NSI apparatus, which carries the solid waste up a waste tube by means of a rotating spiral to a collection point, and stepped apparatus, for example the STEP SCREEN (RTM) L apparatus of HP Waste Water Management AB, which carries solid waste on a conveyor-like series of steps to a discharge point. On the other screens these "steps" can be perforated plate and are formed into a continuous band.

The main problem associated with the step screen and other lamella type screens is that the industry norm will soon be for perforated plate screens. The current designs of perforated plate screens, for larger flows, are based upon a continuous band arrangement moving through the liquid by means of a chain drive assembly. This means that the liquid must pass through the screen twice before proceeding to the treatment works and will cause the head-loss to double. For a designer this means increasing the inlet channel width and installing larger screens.

According to a first embodiment of the present invention there is provided apparatus for the screening of waste water comprising a screen for collecting waste from the waste water and screen-clearing means for removing waste from said screen characterised in that said screen-clearing means comprises a head portion, a mechanism for moving the head portion over the screen, and suction means for removing the waste from the screen.

Preferably said apparatus is for use in fine screening of waste water in sewage and industrial treatment plants.

Preferably said screen is a perforated plate screen. The screen may be provided with holes of diameter 6mm or less.

Preferably the apparatus further comprises a waste water channel. Preferably, in use, said screen spans the flow of the waste water channel.

Preferably said screen is substantially flat. Alternatively said screen is substantially curved. In the case of a curved screen, preferably the curve is directed away from the flow of waste water.

Preferably the head portion is adapted to fit the shape of the screen and has a width substantially equal to the width of the screen. Preferably said mechanism is adapted to move the head portion up and down over the screen.

Preferably said suction means is incorporated in said head portion. Preferably said suction means comprises a pump and a discharge tube in communication with said head portion. The head portion may be provided with a brush.

Preferably the apparatus further comprises a transverse trough formed in the floor of the waste water channel extending across the width of the channel, said trough being in communication with an external tube passing through a wall of the waste water channel adjacent to the end of the transverse trough. Preferably said suction head comprises a downwardly open chamber adapted to fit over the transverse trough. Preferably said suction means comprises a pump and a discharge tube in communication with said external tube.

The head portion may be provided with removal means for assisting in the removal of waste from said screen, for example, the head may be provided with a lip at the top edge of said head portion adjacent to the top of the screen. Alternatively, the head may be provided with a lip at the bottom edge of said head portion adjacent to the base of said screen.

Preferably the waste water will pass through the screen only once, thus minimising head-loss.

The apparatus may further include a jet or vacuum pump to power the suction head.

According to a second aspect of the present invention, there is provided a method for the screening of waste water, said method comprising the steps of routing a supply of waste water into a screening apparatus, passing the waste water through a screen so as to collect waste matter from the waste water on the screen, moving a head portion of a screen-clearing means over the surface of the screen so as to dislodge the waste matter collected on the screen, and removing the dislodged waste matter by suction means to a treatment means.

Preferably said apparatus is an apparatus in accordance with the first aspect of the present invention.

Specific embodiments of the present invention will now be described with reference to the accompanying drawings in which:
Fig 1 is a side view of apparatus in accordance with a first embodiment of the invention, shown in position in a waste water channel;
Fig 2 is a view in perspective of the suction head of the apparatus of Fig 1;
Fig 3 is a side view of the suction head of Fig 2 shown in contact with the perforated screen of the apparatus;
Fig 4 is a side view of apparatus in accordance with a second embodiment of the invention, shown in position in a waste water channel;
Fig 5 is a side view of a waste containment vessel for use with the apparatus of Fig 4;
Fig 6 is a side view of apparatus in accordance with a third embodiment of the invention, shown in position in a waste water channel;
Fig 7 is a detail view of a trough as used in the embodiment of Fig. 6;
Fig. 8 is a detail side view of apparatus in accordance with a fourth embodiment of the invention, shown in position in a waste water channel; and
Fig. 9 is a section view through section IX-IX of Fig.8.

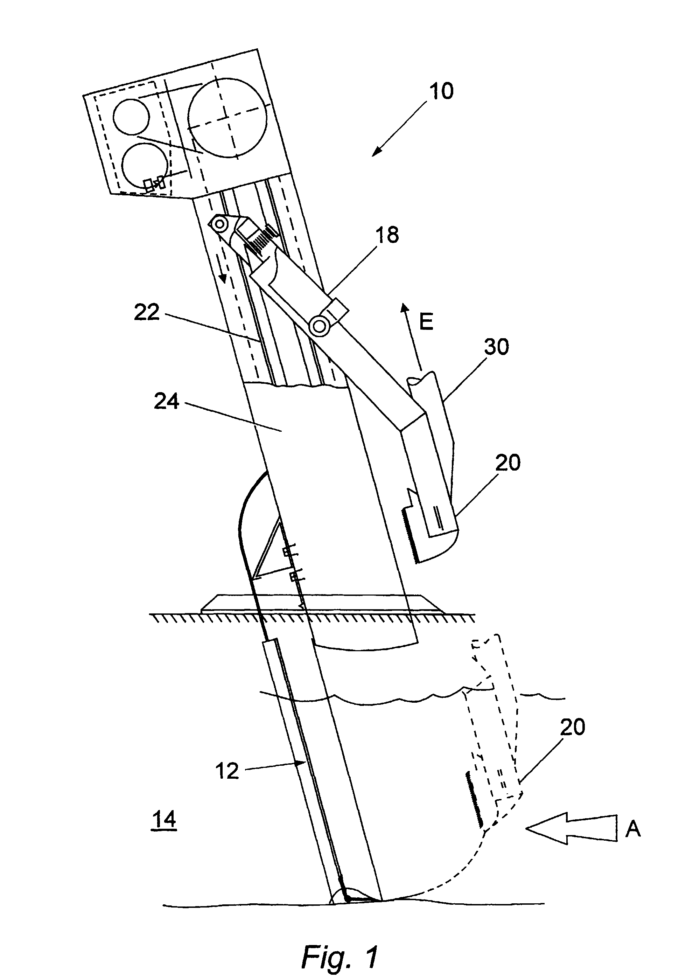

Referring firstly to Figs 1, 2 and 3 of the drawings, apparatus, generally denoted 10, according to a first embodiment of the present invention has a flat perforated screen 12 which spans a waste water channel 14. The direction of flow of the waste water is indicated by arrow A. In this example, the perforated screen has perforations of 6mm diameter or less.

The apparatus 10 also includes screen-clearing means which has a mechanised arm 18 and a suction head 20. The mechanised arm 18 is moveable along a vertical shaft 22. A conventional mechanism concealed within a casing 24 may be used to move the arm 18.

The arm 18 is controlled so as to move in a cycle as follows. As waste water flows in the channel 14, solid particles are collected on the perforated screen 12. In order to clear the screen 12, firstly the arm 18 moves downwardly on the shaft 22 towards the waste water and then when the head 20 reaches the position shown in broken lines in Fig 1, the arm 18 pivots toward the screen 12 until the end of the suction head 20 comes into contact with the screen 12. With the head 20 still in contact with the screen 12, the arm 18 begins to move upwardly on the shaft 22, as suction is applied to the screen 12.

The suction results in the collected particles (also known as "screenings") being sucked into the head 20 and along a discharge tube 30 to a compactor or holding vessel (not shown). Water will be sucked into the head 20, along with the screenings, assisting in the cleaning process. This water can be recycled back into the waste water channel.

The cycle described can be repeated as frequently as necessary in order to keep the screen free of debris.

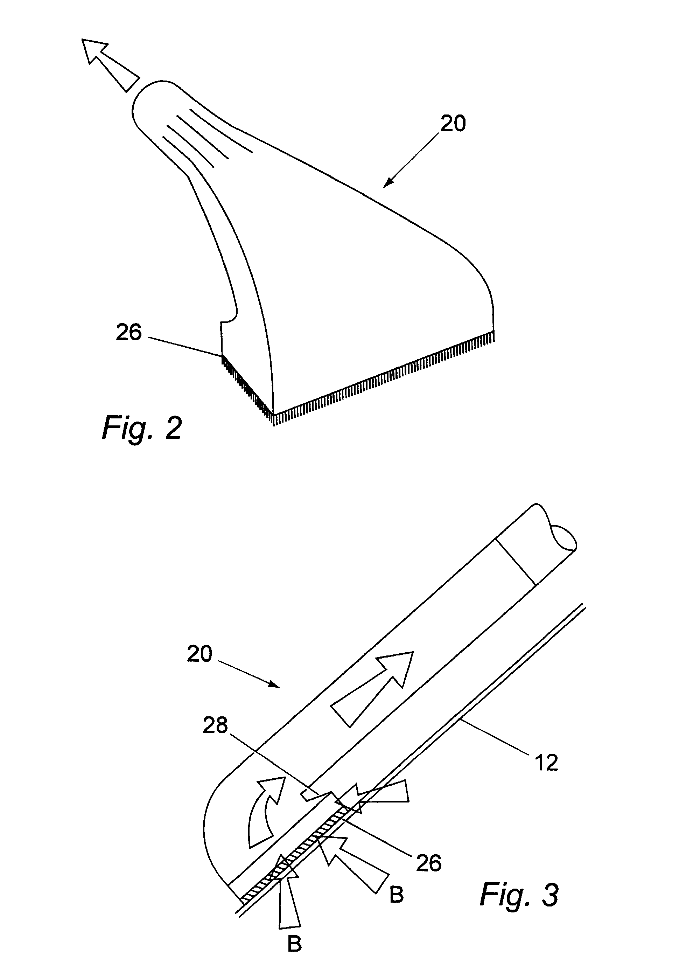

Figs 2 and 3 show the suction head 20 in some more detail. The suction head 20 in this example is provided with a brush 26 for closer and more thorough cleaning of the screen 12. The arrows B in Fig 3 show the direction of suction of the screenings into and along the suction head 20. The suction head 20 is provided with a lip 28 adjacent to the top end of the brush 26. As the head 20 is drawn upwards on the screen 12, the lip 28 accommodates some of the screenings which may otherwise have caused congestion of the apparatus.

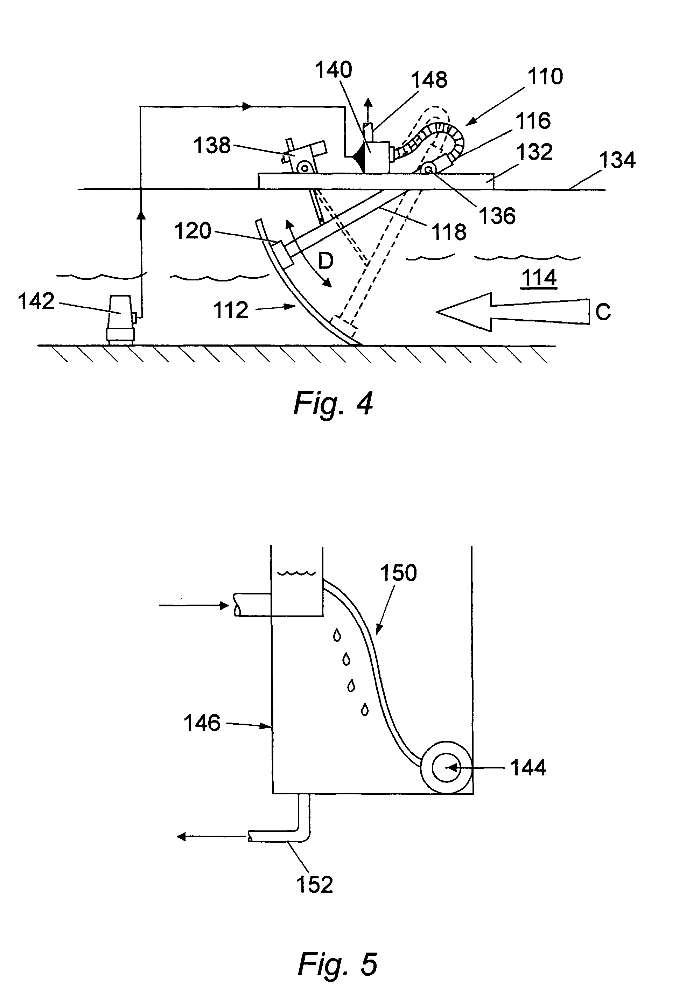

Referring now to Figs 4 and 5, apparatus 110 according to a second embodiment of the invention has a curved perforated screen 112 (although it is envisaged that the curved screen could instead be a flat screen). The screen 112 is shown in position spanning a waste water channel 114. Direction of flow of waste water in the channel 114 is indicated by arrow C.

The apparatus 110 further includes screen-clearing means 116, the bulk of which is located above the flow on a support frame 132 on the channel coping 134. The screen-clearing means 116 includes a moveable arm 118 having a suction head 120 at one end which is in contact with the perforated screen 112. The arm 118 can pivot upwards and downwards about a point 136 and the pivoting motion is brought about by a conventional pivoting mechanism 138. The broken lines in Fig 4 show the arm 118 in its downwardmost position and arrow D shows the direction of possible movement of the arm 118.

The suction head 120 may be provided with a brush (not shown) to improve its scraping ability.

When particles of debris have collected on the screen 112 and have to be removed, the arm 118 sweeps downward and then upward on the screen 112, thereby scraping and sucking the particles along the arm 118 and clearing the screen. This movement can be repeated as often as necessary or at predetermined intervals.

The particles pass along the arm 118 under suction force provided by a standard jet pump 140. The jet pump 140 is powered by a submersible pump 142. From the jet pump 140 the collected particles flow along a tube 148 into a containment vessel 146 to a compactor 144. Fig 5 shows in some more detail the containment vessel 146. After screenings and water come into the vessel 146, they run down another screen 150. This screen 150 may be a HYCOR/NOGGERATH (TM) run down screen, for example. The screenings (with at least some of the water now drained off) now pass into the compactor 144. The drained water can now flow along pipe 152 back to the inlet channel 114. The containment vessel 146 of Fig 5 can be used in conjunction with the apparatus of any or all of Figs 1, 4, 6 and 8. It should be noted that the jet pump 140 may, if desired, be replaced by a vacuum pump.

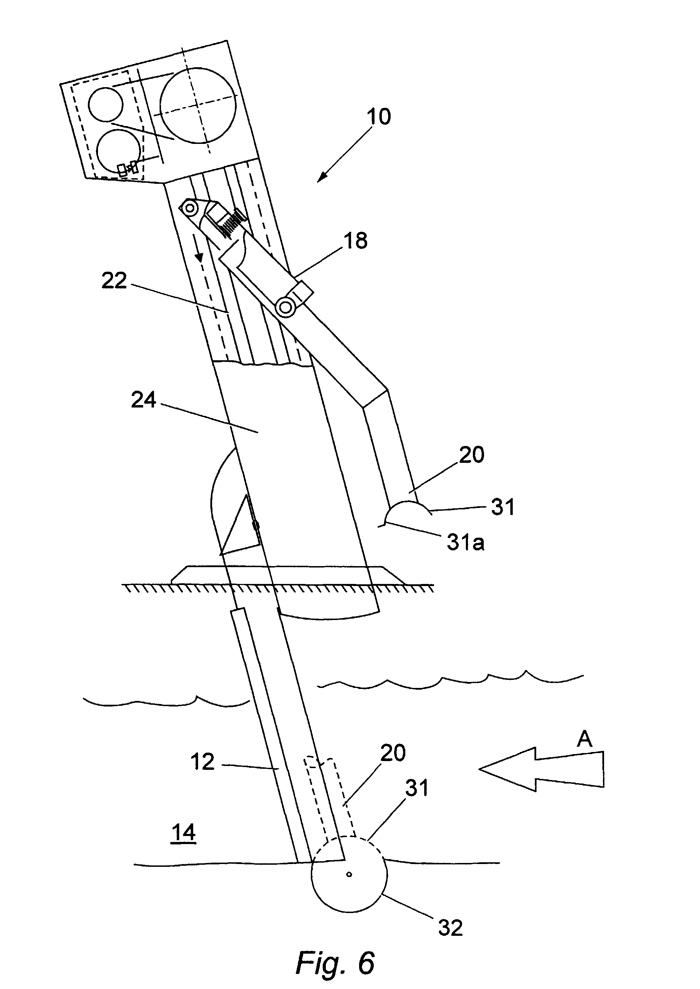

Figure 6 shows a third embodiment of the present invention which is a modification of the first embodiment. The apparatus 10 has a mechanised arm 18 and head 20 as before, but in this embodiment the head 20 is not equipped for suction, but instead is fitted with a half-pipe portion 31. The half-pipe portion 31 has a lip portion 31a which acts as the scraping implement for clearing the screen 12. As the arm 18 moves down the shaft 22, the head 20 comes into contact with the uppermost part of the screen 12, and moves down the screen 12 scraping away the screenings which collect in a trough portion 32 built into the channel floor at the base of the screen 12. Once the head 20 has reached the bottom of the screen 12, the half-pipe 31 closes over the trough 32 to complete a cylindrical section.

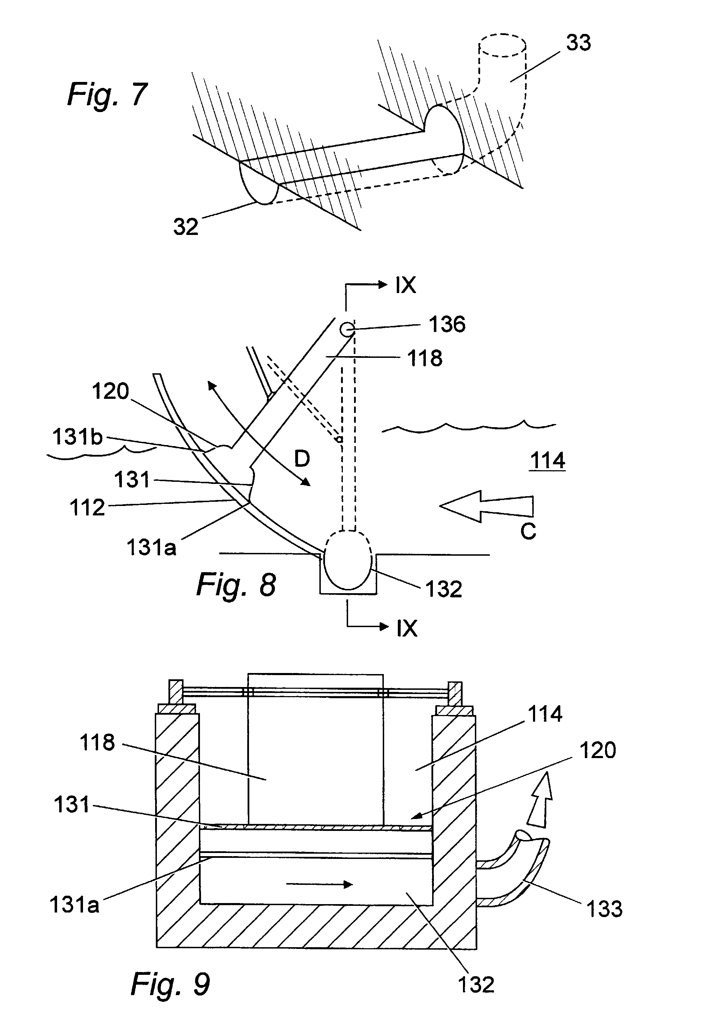

As can be seen from Figure 7, the trough 32 continues out through the channel wall and leads into an extraction tube 33 which runs to a pump (not shown) in the same manner as the previous embodiments. Once the half-pipe 31 seals the cylindrical section, the screenings are extracted by the pump from the trough 32 via the tube 33 to a compactor - such as that shown in Fig. 5 - or a holding vessel (not shown), as described in the previous embodiments.

The fourth embodiment, which can be seen in Figures 8 and 9, is a modification of the second embodiment and uses the same extraction method as detailed above for the third embodiment. Again, the head 120 has no suction, but instead is equipped with a half-pipe 131, which has an upper lip portion 131b and a lower lip portion 131a for scraping the screenings from the screen 112. The scrapings then collect in a trough 132 formed in the channel floor. When the half-pipe 131 reaches the base of the screen 112, it seals over the trough 132 to form a cylinder in which all the screenings are trapped. A pump then extracts the screenings from the trough 132 via a tube 133 to a compactor or holding vessel (not shown), as previously described.

It can be seen from the drawings that the embodiments of the invention include single thickness screens 12, 112 through which the waste water passes. This has the advantage that the screens themselves have no moving parts and will not require extensive maintenance or replacement. Screen perforation diameter can be easily varied by simple replacement of the screen plate 12, 112. In addition, and very advantageously, the embodiments described result in essentially a single head loss of the waste water, so increasing treatment efficiency. As a result the waste water channel need not be as wide as with known screening arrangements.

Modifications and improvements may be made to the foregoing without departing from the intended scope of the invention.

## Claims

1. An apparatus (10,110) for the screening of waste water comprising a screen (12,112) for collecting waste from the waste water and screen-clearing means for removing waste from said screen (12,112) characterised in that said screen-clearing means comprises a head portion (20,120), a mechanism for moving the head portion (20,120) over the screen (12,112) and suction means for removing the waste from the screen (12,112).

2. An apparatus (10,110) according to Claim 1, wherein said screen (12,112) is a perforated plate screen.

3. An apparatus (10,110) according to any preceding claim, wherein the head portion (20,120) is adapted to fit the shape of the screen (12,112) and has a width substantially equal to the width of the screen (12,112).

4. An apparatus (10,110) according to any preceding claim, wherein the drive mechanism is adapted to move the head portion (20,120) up and down over the screen (12,112).

5. An apparatus (10,110) according to any preceding claim, further comprising a waste water channel (14,114) and wherein said screen (12,112) spans the width of the waste water channel (14,114).

6. An apparatus (10) according to any preceding claim, wherein said screen (12) is substantially flat.

7. An apparatus (110) according to any of Claims 1 to 5, wherein said screen (112) is substantially curved.

8. An apparatus (10) according to any preceding claim, wherein said suction means is incorporated in said head portion (20).

9. An apparatus (10) according to Claim 8, wherein said suction means comprises a pump and a discharge tube (30) in communication with said head portion (20).

10. An apparatus (10,110) according to Claim 5 wherein the apparatus (10,110) further comprises a transverse trough (32,132) formed in the floor of the waste water channel (14,114) extending across the width of the channel (14,114), said trough (32,132) being in communication with an external tube (33,133) passing through a wall of the waste water channel (14,114) adjacent to the end of the transverse trough (32,132).

11. An apparatus (10,110) according to Claim 10, wherein said suction head comprises a downwardly open chamber (31,131) adapted to fit over the transverse trough (32,132).

12. An apparatus (110) according to Claim 11, wherein said suction means comprises a pump (140) and a discharge tube (148) in communication with said external tube (133).

13. An apparatus (10) according to any preceding claim, wherein said head portion (20) is provided with a brush (26).

14. An apparatus (110) according to any preceding claim, wherein said head portion (120) is provided with removal means for assisting in the removal of waste from said screen (112).

15. An apparatus (110) according to Claim 14, wherein said removal means is a lip (131b) at the top edge of said head portion (120) adjacent to the top of said screen (112).

16. An apparatus (110) according to Claim 14, wherein said removal means is a lip (131a) at the bottom edge of said head portion (120) adjacent to the base of said screen (112).

17. An apparatus (10,110) according to Claim 9 or 12, wherein said pump (140) is a jet pump or a vacuum pump.

18. A method for the screening of waste water, said method comprising the steps of routing a supply of waste water into a screening apparatus (10,110), passing the waste water through a screen (12,112) so as to collect waste matter from the waste water on the screen (12,112), moving a head portion (20,120) of a screen-clearing means over the surface of the screen (12,112) so as to dislodge the waste matter collected on the screen (12,112), and removing the dislodged waste matter by suction means to a treatment means.

19. A method according to Claim 18, wherein said apparatus is an apparatus according to any of Claims 1 to 17.
